# EUROPEAN PATENT APPLICATION

(11) **EP 4 760 617 A1**
(43) Date of publication of application: **17.06.2026**
(21) Application number: 25223887.8
(22) Date of filing: 16.12.2025
(51) Int. Cl.: G06Q 10/20, G06F 21/62, G07C 5/00

(54) **INFORMATION PROCESSING SERVER, LOCAL SERVER, INFORMATION PROCESSING SYSTEM, AND INFORMATION PROCESSING METHOD**

(30) Priority: 16.12.2024 JP 2024220391
(71) Applicant: Toyota Jidosha Kabushiki Kaisha, Toyota-shi, Aichi-ken 471-8571 (JP)
(72) Inventor: KOSAKA, Kei, TOYOTA-SHI, AICHI-KEN, 471-8571 (JP); IWATA, Kazuya, TOYOTA-SHI, AICHI-KEN, 471-8571 (JP); KIKUCHI, Takahiro, TOYOTA-SHI, AICHI-KEN, 471-8571 (JP); MATSUKAWA, Yuki, TOYOTA-SHI, AICHI-KEN, 471-8571 (JP)
(74) Representative: Cabinet Beau de Loménie

(57) **Abstract**

An information processing server (40) includes a communication interface (43) configured to receive, from a customer information management server (30) that manages information on an owner or user of a vehicle, information indicating whether a personal information protection function that protects personal information on the owner or user is enabled or disabled, and when the personal information protection function is disabled, receive vehicle information regarding the vehicle (10) from a data collection server (20) that collects the vehicle information, and a controller (42) configured to perform, based on the vehicle information, deterioration determination of a component related to the vehicle when the personal information protection function is disabled, and not to perform the deterioration determination when the personal information protection function is enabled.

## Description

### TECHNICAL FIELD

The present disclosure relates to an information processing server, a local server, an information processing system, and an information processing method.

### BACKGROUND

Some vehicle components are required or recommended to be replaced when travel distances of vehicles or usage periods of the components exceed predetermined values. Therefore, services that notify users that time for replacement is approaching and encourage the replacement of components when the travel distances or usage periods approach the predetermined values have been provided. Additionally, the rate of deterioration may vary depending on the usage of components, so technology for detecting the deterioration of components for each vehicle has been developed. For example, Patent Literature (PTL) 1 discloses an information provision apparatus for vehicles that detects the degree of deterioration in engine oil of a vehicle, calculates, based on the degree of deterioration, a fuel efficiency improvement effect when the engine oil is replaced, and notifies a user of the fuel efficiency improvement effect.

### CITATION LIST

### Patent Literature

PTL 1: JP 2010-188823 A

### SUMMARY

However, the information provision apparatus for vehicles according to PTL 1 does not consider the presence or absence of the consent of an owner or user of a vehicle regarding personal information.

It would be helpful to provide an information processing server, a local server, an information processing system, and an information processing method that can perform deterioration determination of a component in consideration of the setting of a personal information protection function.

An information processing server according to an embodiment of the present disclosure includes:
a communication interface configured to receive, from a customer information management server that manages information on an owner or user of a vehicle, information indicating whether a personal information protection function that protects personal information on the owner or user is enabled or disabled, and when the personal information protection function is disabled, receive vehicle information regarding the vehicle from a data collection server that collects the vehicle information; and
a controller configured to perform, based on the vehicle information, deterioration determination of a component related to the vehicle when the personal information protection function is disabled, and not to perform the deterioration determination when the personal information protection function is enabled.

A local server according to an embodiment of the present disclosure includes:
a communication interface configured to receive, from a customer information management server that manages information on an owner or user of a vehicle or a terminal apparatus of the owner or the user, information indicating whether a personal information protection function that protects personal information on the owner or user is enabled or disabled; and
a controller configured to generate notification information notifying that deterioration determination based on vehicle information regarding the vehicle cannot be performed when setting of the personal information protection function is enabled,
wherein the communication interface is configured to transmit the notification information to the terminal apparatus.

An information processing system according to an embodiment of the present disclosure includes:
an information processing server configured to perform deterioration determination of a component related to a vehicle;
a local server configured to manage a replacement history of the component;
a data collection server configured to collect information related to the vehicle; and
a customer information management server configured to manage information on an owner or user of the vehicle,
wherein
the customer information management server is configured to transmit, to the information processing server, information indicating whether a personal information protection function that protects personal information on the owner or user is enabled or disabled, and
the information processing server is configured to perform the deterioration determination of the component related to the vehicle when the personal information protection function is disabled, and not to perform the deterioration determination when the personal information protection function is enabled.

An information processing method according to an embodiment of the present disclosure includes:
acquiring, by an information processing server, information indicating whether a personal information protection function that protects personal information on an owner or user of a vehicle is enabled or disabled; and
performing, by the information processing server, deterioration determination of a component related to the vehicle when the personal information protection function is disabled, and not performing the deterioration determination when the personal information protection function is enabled.

According to the present disclosure, it is possible to perform deterioration determination of a component in consideration of the setting of a personal information protection function.

### BRIEF DESCRIPTION OF THE DRAWINGS

In the accompanying drawings:
FIG. 1 is a diagram illustrating a schematic configuration of an information processing system according to an embodiment of the present disclosure;
FIG. 2 is a diagram illustrating a schematic configuration of an information processing server in the information processing system according to the embodiment of the present disclosure;
FIG. 3 is a diagram illustrating a schematic configuration of a local server in the information processing system according to the embodiment of the present disclosure; and
FIG. 4 is a flowchart illustrating an example of operations of the information processing server according to the embodiment of the present disclosure.

### DETAILED DESCRIPTION

An embodiment of the present disclosure will be described in detail below, with reference to the drawings.

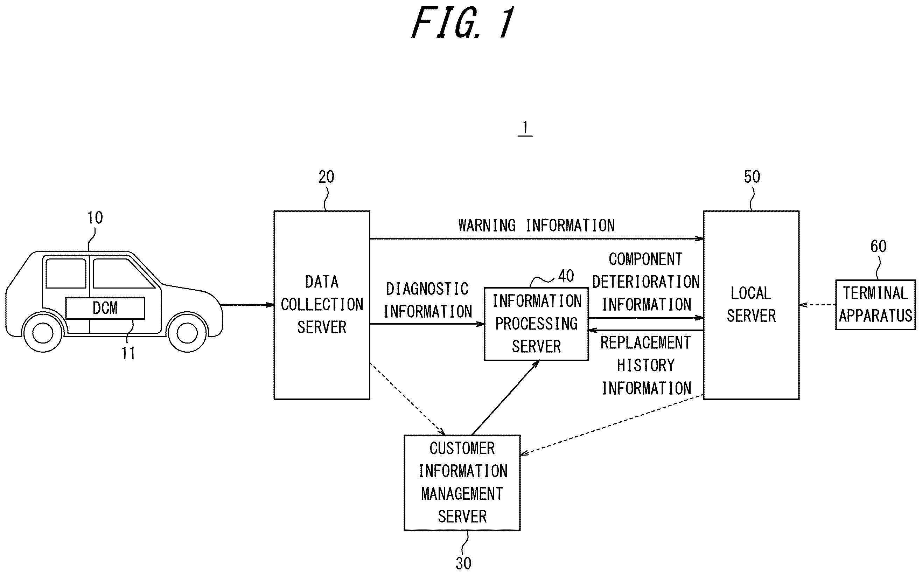

A configuration of an information processing system according to the embodiment will be described with reference to FIG. 1. An information processing system 1 illustrated in FIG. 1 includes a vehicle 10, a data collection server 20, a customer information management server 30, an information processing server 40, a local server 50, and a terminal apparatus 60.

The vehicle 10 is equipped with an in-vehicle communication module 11. The in-vehicle communication module 11 is a communication module dedicated to vehicles, and is also referred to as a data communication module (DCM). The in-vehicle communication module 11 communicates with the data collection server 20, and transmits various information regarding the vehicle 10 to the data collection server 20.

The customer information management server 30 is a server that manages information on an owner or user of the vehicle 10. The "Information on an owner or user" includes contract information on the owner or user, personal information on the owner or user, information indicating whether a personal information protection function that protects the personal information on the owner or user is enabled or disabled, and the like.

The method of setting the information indicating whether the personal information protection function is enabled or disabled varies from country to country. In a first setting method, the owner or user sets the information indicating whether the personal information protection function is enabled or disabled using an in-vehicle device mounted in the vehicle 10, and the data collection server 20 collects that information. In this case, the customer information management server 30 acquires that information from the data collection server 20 (indicated by the dotted line in FIG. 1), and transmits that information to the information processing server 40. In a second setting method, the owner or user sets the information indicating whether the personal information protection function is enabled or disabled using the terminal apparatus 60, and the local server 50 collects that information (indicated by the dotted line in FIG. 1). In this case, the customer information management server 30 acquires that information from the local server 50 (indicated by the dotted line in FIG. 1), and transmits that information to the information processing server 40.

The data collection server 20 collects information regarding the vehicle 10. The data collection server 20, which communicates with multiple vehicles 10, receives, from each vehicle 10, vehicle information regarding the vehicle 10 and accumulates the vehicle information. For the sake of convenience, only one vehicle 10 is illustrated in FIG. 1. The data collection server 20 may be divided into a server that acquires the vehicle information from each vehicle 10 and a server that collects, converts, and accumulates the vehicle information.

When the setting of the personal information protection function is enabled, the data collection server 20 does not transmit the vehicle information to the information processing server 40. When the setting of the personal information protection function is disabled, the data collection server 20 transmits the vehicle information regarding the vehicle 10 to the information processing server 40. The "vehicle information" is, for example, diagnostic (failure diagnosis) information. The "vehicle information" may include information based on controller area network (CAN) communication. The data collection server 20 transmits warning information to the local server 50. In other words, the warning information does not require processing at the information processing server 40, and is therefore transmitted directly from the data collection server 20 to the local server 50.

The information processing server 40 determines the state of a component related to the vehicle 10 (hereinafter simply referred to as "component"). The "component" includes, for example, engine oil, an auxiliary battery, and an electronic key (smart key). The information processing server 40 determines, for example, the deterioration of the engine oil, the charge level (over-discharge) of the auxiliary battery, the deterioration of the auxiliary battery, and the remaining battery level of the electronic key (smart key). The information processing server 40 determines the state of the component, and transmits information indicating the determination result to the local server 50. Details of the information processing server 40 will be described later.

The terminal apparatus 60 is a client terminal that communicates with the local server 50. The terminal apparatus 60 may be a mobile terminal such as a smartphone owned by the owner or user of the vehicle 10, or a computer such as a personal computer (PC) installed at a dealership.

The local server 50 manages a history of component replacement for the vehicle 10 and the like, in collaboration with the dealership. When a component is replaced, the local server 50 stores, as maintenance information, information on the date and time of the component replacement, the elapsed time since the last component replacement, and the travel distance since the last component replacement, and the like. When a component is replaced, the local server 50 transmits, to the information processing server 40, replacement history information indicating that the component has been replaced. Details of the local server 50 will be described later.

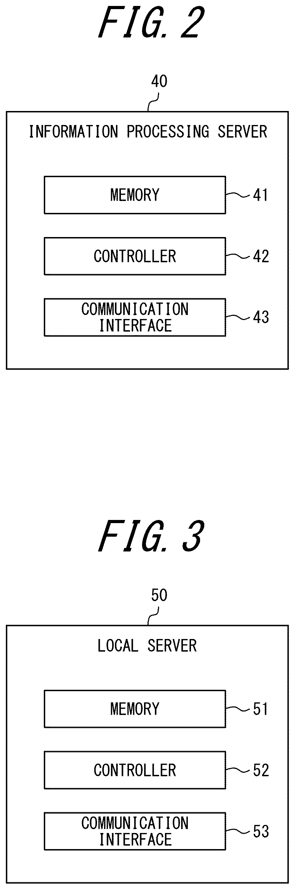

FIG. 2 is a diagram illustrating a schematic configuration of the information processing server 40. The information processing server 40 includes a memory 41, a controller 42, and a communication interface 43.

The memory 41 includes at least one semiconductor memory, at least one magnetic memory, at least one optical memory, or any combination thereof. The semiconductor memory is, for example, random access memory (RAM), read only memory (ROM), or flash memory. The memory 41 functions as, for example, a main memory, an auxiliary memory, or a cache memory. The memory 41 stores information to be used for operations of the information processing server 40 and information obtained by operations of the information processing server 40.

The communication interface 43 includes a communication interface for communicating with the data collection server 20, the customer information management server 30, and the local server 50. The communication interface 43 receives, from the customer information management server 30, information indicating whether the personal information protection function, which protects personal information on the owner or user, is enabled or disabled. When the personal information protection function is disabled, the communication interface 43 receives vehicle information from the data collection server 20. The communication interface 43 causes the memory 41 to store the received information.

The controller 42 includes at least one processor, at least one programmable circuit, at least one dedicated circuit, or any combination thereof. The processor is a general purpose processor, such as a central processing unit (CPU) or a graphics processing unit (GPU), or a dedicated processor specialized for specific processing. The programmable circuit is, for example, a field-programmable gate array (FPGA). The dedicated circuit is, for example, an application specific integrated circuit (ASIC). The controller 42 executes processes related to operations of the information processing server 40 while controlling components of the information processing server 40.

When the personal information protection function is enabled, the controller 42 cannot acquire vehicle information, and therefore does not perform deterioration determination. When the personal information protection function is disabled, the controller 42 performs deterioration determination of a component based on vehicle information. By acquiring the vehicle information, the controller 42 can perform individual deterioration determination according to the usage pattern of each vehicle 10. Upon performing the deterioration determination of the component, the controller 42 controls the communication interface 43 to transmit information indicating the determination result (for example, component deterioration information indicating that the component has deteriorated) to the local server 50.

When the personal information protection function has been disabled after being enabled, the controller 42 does not perform deterioration determination until a currently used component is replaced, as the component may have been replaced during the period in which the personal information protection function was enabled. Upon acquiring, from the information processing server 40, replacement history information indicating that the component has been replaced, that is, when the currently used component is replaced, the controller 42 then starts deterioration determination of a replaced component.

The controller 42 determines the deterioration of the component by comparing an elapsed time since the last component replacement, a travel distance since the last component replacement, current fuel efficiency, and the like, with thresholds. When the component is replaced, the controller 42 resets the variables used for deterioration determination, such as the elapsed time, travel distance, and fuel efficiency, and then starts the deterioration determination of the newly replaced component.

It is conceivable that components have different performances depending on product numbers. When a threshold for deterioration determination is fixed to a predetermined value, the controller 42 cannot perform individual deterioration determination for components of each product number. Therefore, the information processing server 40 may receive information indicating the product number of a component from the local server 50, and when performing deterioration determination, the controller 42 may perform constant adaptation determination to change the threshold for the deterioration determination according to the product number of the component. This process enables appropriate determination of the replacement timing for the components of each product number.

FIG. 3 is a diagram illustrating a schematic configuration of the local server 50. The local server 50 includes a memory 51, a controller 52, and a communication interface 53.

The memory 51 includes at least one semiconductor memory, at least one magnetic memory, at least one optical memory, or any combination thereof. The semiconductor memory is, for example, RAM, ROM, or flash memory. The memory 51 functions as, for example, a main memory, an auxiliary memory, or a cache memory. The memory 51 stores information to be used for operations of the local server 50 and information obtained by operations of the local server 50.

The communication interface 53 includes a communication interface for communicating with the data collection server 20, the customer information management server 30, the information processing server 40, and the terminal apparatus 60. The communication interface 53 receives, from the terminal apparatus 60 or the customer information management server 30, information indicating whether the personal information protection function is enabled or disabled. The communication interface 53 receives component deterioration information from the information processing server 40. The communication interface 53 receives warning information from the data collection server 20. The communication interface 53 causes the memory 51 to store the received information.

The controller 52 includes at least one processor, at least one programmable circuit, at least one dedicated circuit, or any combination thereof. The processor is a general purpose processor such as a CPU or GPU, or a dedicated processor that is dedicated to specific processing. The programmable circuit is, for example, an FPGA. The dedicated circuit is, for example, an ASIC. The controller 52 executes processes related to operations of the local server 50 while controlling components of the local server 50.

Upon acquiring warning information from the data collection server 20, the controller 52 generates a warning message and controls the communication interface 53 to transmit the warning message to the terminal apparatus 60. The local server 50 may directly transmit the warning message to the vehicle 10.

When a component of the vehicle 10 is replaced, the controller 52 generates replacement history information and controls the communication interface 53 to transmit the replacement history information to the information processing server 40.

When the personal information protection function is disabled, upon receiving component deterioration information from the information processing server 40, the controller 52 may control the communication interface 53 to transmit the received component deterioration information to the terminal apparatus 60. When the personal information protection function is enabled, deterioration determination of a component is not performed in the information processing server 40. Therefore, when the personal information protection function is enabled, the controller 52 uniformly performs deterioration determination of the component based on a travel distance of the vehicle 10 or the usage of the component. The controller 52 controls the communication interface 53 to transmit information indicating the determination result by the controller 52 to the terminal apparatus 60.

The controller 52 acquires information indicating whether the personal information protection function is enabled or disabled. When the setting of the personal information protection function is enabled, the controller 52 generates notification information notifying that deterioration determination based on vehicle information cannot be performed, and controls the communication interface 53 to transmit the notification information to the terminal apparatus 60. The notification information may specify the reason why deterioration determination based on vehicle information cannot be performed. For example, the controller 52 may use the message "Deterioration determination of the component cannot be performed because the setting of the personal information protection function is enabled." as the notification information. Transmitting such notification information by the communication interface 53 allows the dealership or the owner or user to understand that deterioration determination of the component is not performed due to the enabling of the setting of the personal information protection function.

The controller 52 may further include, in the above notification information, a condition under which deterioration determination based on vehicle information can be performed. For example, the controller 52 may use the message "When the setting of the personal information protection function is disabled, after the currently used component is replaced, deterioration determination of a replaced component starts." as the notification information. Transmitting such notification information by the communication interface 53 allows the dealership or the owner or user to understand that the setting of the personal information protection function has to be disabled to perform deterioration determination of the component and when the deterioration determination of the component starts.

### <Operations of Information Processing Server>

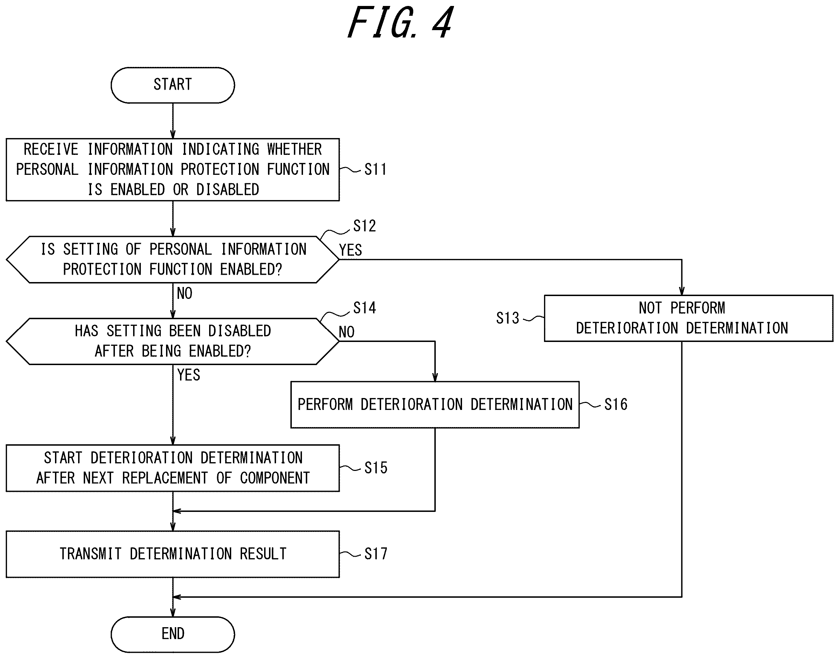

Next, operations of the information processing server 40 according to the present embodiment will be described with reference to FIG. 4.

**In** S11, the communication interface 43 receives, from the customer information management server 30, information indicating whether a personal information protection function is enabled or disabled.

**In** S12, the controller 42 determines whether the setting of the personal information protection function is enabled or disabled. When the setting of the personal information protection function is enabled, the controller 42 proceeds to S13. When the setting of the personal information protection function is disabled, the controller 42 proceeds to S14.

**In** S13, the controller 42 does not perform deterioration determination of a component. The communication interface 43 does not receive information from the data collection server 20 during the period when the setting of the personal information protection function is enabled, but may receive replacement history information or the like from the local server 50. In this case, the information received from the local server 50 is ignored without being used in determination processing by the controller 42.

In S14, the controller 42 determines whether the setting of the personal information protection function has been disabled after being enabled or without being enabled. When the setting of the personal information protection function has been disabled after being enabled, the controller 42 proceeds to S15. When the setting of the personal information protection function has been disabled without being enabled, the controller 42 proceeds to S16.

In S15, the controller 42 does not perform deterioration determination until the currently used component is replaced after the setting of the personal information protection function is disabled. When the component is replaced after the setting of the personal information protection function is disabled, the communication interface 43 receives vehicle information from the data collection server 20. The controller 42 then starts deterioration determination of a replaced component based on the vehicle information.

In S16, the communication interface 43 receives, from the data collection server 20, vehicle information (for example, diagnostic information) on the vehicle 10. The controller 42 then performs deterioration determination of the component based on the vehicle information.

In S17, the controller 42 generates information indicating the result of the deterioration determination of the component. The communication interface 43 transmits this information to the local server 50.

As described above, the information processing server 40 according to the present embodiment includes the communication interface 43 that receives, from the customer information management server 30, information indicating whether a personal information protection function is enabled or disabled and when the personal information protection function is disabled, receives vehicle information from the data collection server 20, and the controller 42 that performs deterioration determination of a component based on the vehicle information when the personal information protection function is disabled, and does not perform the deterioration determination when the personal information protection function is enabled. When the personal information protection function has been disabled after being enabled, the controller 42 of the information processing server 40 according to the present embodiment does not perform deterioration determination until the currently used component is replaced, as the component may have been replaced during the period in which the personal information protection function was enabled, and starts the deterioration determination of a replaced component after the component is replaced. Therefore, according to the present disclosure, it is possible to appropriately perform deterioration determination in consideration of the setting of the personal information protection function.

### <Program>

It is also possible to cause a computer capable of executing program instructions to function as the information processing server 40 described above. It is also possible to cause a computer capable of executing program instructions to function as the local server 50 described above. A program causes a computer to execute operations described above, thereby causing the computer to function as the information processing server 40 or the local server 50.

The program can be stored on a non-transitory computer readable medium. The non-transitory computer readable medium is, for example, flash memory, a magnetic recording device, an optical disc, a magneto-optical recording medium, or ROM. The program is distributed, for example, by selling, transferring, or lending a portable medium such as a secure digital (SD) card, a digital versatile disc (DVD), or a compact disc read only memory (CD-ROM) on which the program is stored. The program may be distributed by storing the program in a storage of a server and transferring the program from the server to another computer. The program may be provided as a program product.

The computer temporarily stores, in the memory 41, 51, the program stored in the portable medium or the program transferred from the server. Then, the computer reads the program stored in the memory 41, 51 using a processor (controller 42, 52) and executes processes in accordance with the read program using the processor. The computer may read the program directly from the portable medium, and execute processes in accordance with the program. The computer may, each time a program is transferred from the server to the computer, sequentially execute processes in accordance with the received program. Without transferring the program from the server to the computer, processes may be executed by a so-called application service provider (ASP) type service that realizes functions only by execution instructions and result acquisitions. The program encompasses information that is to be used for processing by an electronic computer and is thus equivalent to a program. For example, data that is not a direct command to a computer but has a property that regulates processing of the computer is "equivalent to a program" in this context.

The above-described embodiment has been explained as a representative example, but various modifications or changes can be made without departing from the spirit of the present disclosure. For example, it is possible to combine multiple configuration blocks or processing steps described in the embodiment into one, or to divide one into multiple blocks or steps.

Examples of some embodiments of the present disclosure are described below. However, it should be noted that the embodiments of the present disclosure are not limited to these examples.
[Appendix 1] An information processing server comprising:
   a communication interface configured to receive, from a customer information management server that manages information on an owner or user of a vehicle, information indicating whether a personal information protection function that protects personal information on the owner or user is enabled or disabled, and when the personal information protection function is disabled, receive vehicle information regarding the vehicle from a data collection server that collects the vehicle information; and
   a controller configured to perform, based on the vehicle information, deterioration determination of a component related to the vehicle when the personal information protection function is disabled, and not to perform the deterioration determination when the personal information protection function is enabled.
[Appendix 2] An information processing server configured to:
   acquire information indicating whether a personal information protection function that protects personal information on an owner or user of a vehicle is enabled or disabled; and
   perform deterioration determination of a component related to the vehicle when the personal information protection function is disabled, and not perform the deterioration determination when the personal information protection function is enabled.
[Appendix 3] The information processing server according to appendix 1 or 2, configured not to perform the deterioration determination until a currently used component is replaced when the personal information protection function has been disabled after being enabled, and to start the deterioration determination of a replaced component when the currently used component is replaced.
[Appendix 4] The information processing server according to appendix 2 or 3, configured to perform the deterioration determination of the component based on vehicle information regarding the vehicle when the personal information protection function is disabled.
[Appendix 5] The information processing server according to any one of appendices 1 to 4, configured to, when performing the deterioration determination, change a threshold for the deterioration determination according to a product number of the component.
[Appendix 6] The information processing server according to any one of appendices 1 to 5, wherein the component includes engine oil.
[Appendix 7] A local server comprising:
   a communication interface configured to receive, from a customer information management server that manages information on an owner or user of a vehicle or a terminal apparatus of the owner or the user, information indicating whether a personal information protection function that protects personal information on the owner or user is enabled or disabled; and
   a controller configured to generate notification information notifying that deterioration determination based on vehicle information regarding the vehicle cannot be performed when setting of the personal information protection function is enabled,
   wherein the communication interface is configured to transmit the notification information to the terminal apparatus.
[Appendix 8] A local server configured to:
   acquire information indicating whether a personal information protection function that protects personal information on an owner or user of a vehicle is enabled or disabled; and
   when setting of the personal information protection function is enabled, transmit notification information notifying that deterioration determination based on vehicle information regarding the vehicle cannot be performed.
[Appendix 9] The local server according to appendix 7 or 8, wherein when the setting of the personal information protection function is enabled, the notification information further includes a condition under which the deterioration determination based on the vehicle information can be performed.
[Appendix 10] An information processing system comprising:
   an information processing server configured to perform deterioration determination of a component related to a vehicle;
   a local server configured to manage a replacement history of the component;
   a data collection server configured to collect information related to the vehicle; and
   a customer information management server configured to manage information on an owner or user of the vehicle,
   wherein
   the customer information management server is configured to transmit, to the information processing server, information indicating whether a personal information protection function that protects personal information on the owner or user is enabled or disabled, and
   the information processing server is configured to perform the deterioration determination of the component related to the vehicle when the personal information protection function is disabled, and not to perform the deterioration determination when the personal information protection function is enabled.
[Appendix 11] The information processing system according to appendix 10, wherein
   the local server is configured to transmit, to the information processing server, replacement history information indicating that the component has been replaced when the component has been replaced, and
   the information processing server is configured not to perform the deterioration determination until a currently used component is replaced when the setting of the personal information protection function has been disabled after being enabled, and to start the deterioration determination of a replaced component when the currently used component is replaced.
[Appendix 12] The information processing system according to appendix 10 or 11, wherein
   the data collection server is configured to transmit vehicle information regarding the vehicle to the information processing server when the personal information protection function is disabled, and
   the information processing server is configured to perform the deterioration determination of the component based on the vehicle information when the personal information protection function is disabled. [Appendix 13] The information processing system according to any one of appendices 10 to 12, wherein when performing the deterioration determination, the information processing server is configured to change a threshold for the deterioration determination according to a product number of the component. [Appendix 14] An information processing method comprising:
   acquiring, by an information processing server, information indicating whether a personal information protection function that protects personal information on an owner or user of a vehicle is enabled or disabled; and
   performing, by the information processing server, deterioration determination of a component related to the vehicle when the personal information protection function is disabled, and not performing the deterioration determination when the personal information protection function is enabled.
[Appendix 15] The information processing method according to appendix 14, comprising not performing the deterioration determination until a currently used component is replaced when the setting of the personal information protection function has been disabled after being enabled, and starting, by the information processing server, the deterioration determination of a replaced component when the currently used component is replaced.
[Appendix 16] The information processing method according to appendix 14 or 15, comprising performing, by the information processing server, the deterioration determination of the component based on vehicle information regarding the vehicle when the personal information protection function is disabled.
[Appendix 17] The information processing method according to any one of appendices 14 to 16, comprising, when performing the deterioration determination, changing, by the information processing server, a threshold for the deterioration determination according to a product number of the component.
[Appendix 18] The information processing method according to any one of appendices 14 to 17, wherein the component includes engine oil.
[Appendix 19] An information processing method comprising:
   acquiring, by a local server, information indicating whether a personal information protection function that protects personal information on an owner or user of a vehicle is enabled or disabled; and
   transmitting, by the local server, notification information notifying that deterioration determination based on vehicle information regarding the vehicle cannot be performed when setting of the personal information protection function is enabled.
[Appendix 20] The information processing method according to appendix 19, comprising, when the setting of the personal information protection function is enabled, further adding, by the local server, a condition under which the deterioration determination based on the vehicle information can be performed, in the notification information.

## Claims

1. An information processing server (40) configured to:
acquire information indicating whether a personal information protection function that protects personal information on an owner or user of a vehicle (10) is enabled or disabled; and
perform deterioration determination of a component related to the vehicle (10) when the personal information protection function is disabled, and not perform the deterioration determination when the personal information protection function is enabled.

2. The information processing server (40) according to claim 1, configured not to perform the deterioration determination until a currently used component is replaced when the personal information protection function has been disabled after being enabled, and to start the deterioration determination of a replaced component when the currently used component is replaced.

3. The information processing server (40) according to claim 1 or 2, configured to perform the deterioration determination of the component based on vehicle information regarding the vehicle (10) when the personal information protection function is disabled.

4. The information processing server (40) according to any one of claims 1 to 3, configured to, when performing the deterioration determination, change a threshold for the deterioration determination according to a product number of the component.

5. The information processing server (40) according to any one of claims 1 to 4, wherein the component includes engine oil.

6. An information processing system (1) comprising:
the information processing server (40) according to claim 1;
a local server (50) configured to manage a replacement history of the component;
a data collection server (20) configured to collect information related to the vehicle (10); and
a customer information management server (30) configured to manage information on an owner or user of the vehicle (10),
wherein the customer information management server (30) is configured to transmit, to the information processing server (40), information indicating whether a personal information protection function that protects personal information on the owner or user is enabled or disabled.

7. The information processing system (1) according to claim 6, wherein
the local server (50) is configured to transmit, to the information processing server (40), replacement history information indicating that the component has been replaced when the component has been replaced, and
the information processing server (40) is configured not to perform the deterioration determination until a currently used component is replaced when setting of the personal information protection function has been disabled after being enabled, and to start the deterioration determination of a replaced component when the currently used component is replaced.

8. The information processing system (1) according to claim 6 or 7, wherein
the data collection server (20) is configured to transmit vehicle information regarding the vehicle (10) to the information processing server (40) when the personal information protection function is disabled, and
the information processing server (40) is configured to perform the deterioration determination of the component based on the vehicle information when the personal information protection function is disabled.

9. The information processing system (1) according to any one of claims 6 to 8, wherein when performing the deterioration determination, the information processing server(40) is configured to change a threshold for the deterioration determination according to a product number of the component.

10. The information processing system (1) according to any one of claims 6 to 9, wherein when setting of the personal information protection function is enabled, the local server (50) generates notification information notifying that deterioration determination based on vehicle information regarding the vehicle (10) cannot be performed.

11. The information processing system (1) according to claim 10, wherein when the setting of the personal information protection function is enabled, the notification information further includes a condition under which the deterioration determination based on the vehicle information can be performed.

12. An information processing method comprising:
Acquiring (S11), by an information processing server (40), information indicating whether a personal information protection function that protects personal information on an owner or user of a vehicle (10) is enabled or disabled; and
Performing (S16), by the information processing server (40), deterioration determination of a component related to the vehicle (10) when the personal information protection function is disabled, and not performing (S13) the deterioration determination when the personal information protection function is enabled.

13. The information processing method according to claim 12, comprising not performing (S15) the deterioration determination until a currently used component is replaced when setting of the personal information protection function has been disabled after being enabled, and starting, by the information processing server (40), the deterioration determination of a replaced component when the currently used component is replaced.

14. The information processing method according to claim 12 or 13, comprising performing, by the information processing server (40), the deterioration determination of the component based on vehicle information regarding the vehicle (10) when the personal information protection function is disabled.

15. The information processing method according to any one of claims 12 to 14, comprising, when performing the deterioration determination, changing, by the information processing server (40), a threshold for the deterioration determination according to a product number of the component.
